# EUROPEAN PATENT APPLICATION

(11) **EP 2 578 411 A1**
(43) Date of publication of application: **10.04.2013**
(21) Application number: 11789859.3
(22) Date of filing: 01.06.2011
(51) Int. Cl.: B41M 5/382, B32B 27/26, B41M 5/42, B44C 1/17

(54) **TRANSFER MATERIAL**

(30) Priority: 02.06.2010 JP 2010127033
(71) Applicant: Daiso Co., Ltd., Osaka-shi, Osaka 550-0011 (JP)
(72) Inventor: YOKOYAMA, Katsutoshi, Osaka-shi Osaka 550-0011 (JP); INOUE, Satoshi, Osaka-shi Osaka 550-0011 (JP); OGAWA, Shunsuke, Osaka-shi Osaka 550-0011 (JP); SAKURAI, Tetsuo, Osaka-shi Osaka 550-0011 (JP)
(74) Representative: Vossius & Partner
(86) International application number: PCT/JP2011/062602
(87) International publication number: WO 2011/152457

(57) **Abstract**

Transfer foils have a protective layer or protective colored layer which has been disposed thereon in order to impart a coloring effect. For configuring such protective layers, isocyanates are frequently used as curing agents. However, the isocyanates have poor storage stability especially under high-temperature high-humidity conditions in summer, and it is necessary to employ a two-pack type formulation, which is extremely inconvenient to use. Namely, common compositions each is composed of two ingredients, i.e., a resin ingredient and an isocyanate curing agent, and it is necessary that the two ingredients should be stored separately and be mixed together when a transfer foil is produced. Once the ingredients are mixed, the resultant liquid composition gels in several hours to several days to become unusable. A composition for transfer-foil protection layers which is capable of being supplied as a one-pack type can be obtained using a blocked polyisocyanate in which the isocyanate groups have been blocked with a compound containing active hydrogen.

## Description

### FIELD OF THE INVENTION

The present invention relates to a transfer material used for a print and a decoration.

### BACKGROUND ART

The transfer materials can be used for decoration of various articles to be impressed (articles subjected to transfer), e.g., an article to be impressed having a plane shape or a solid shape including interior materials such as an automobile, a ship and an air plane; a cosmetics container, a cap, a package, an in-mold molded article, a light-power product, a wearing apparel, a woodwork, furniture, a plastic work piece, a book and a card. The transfer can be performed by a hot stamping or a cold stamping, and the transfer can be performed on a front surface or any part of the article to be impressed.

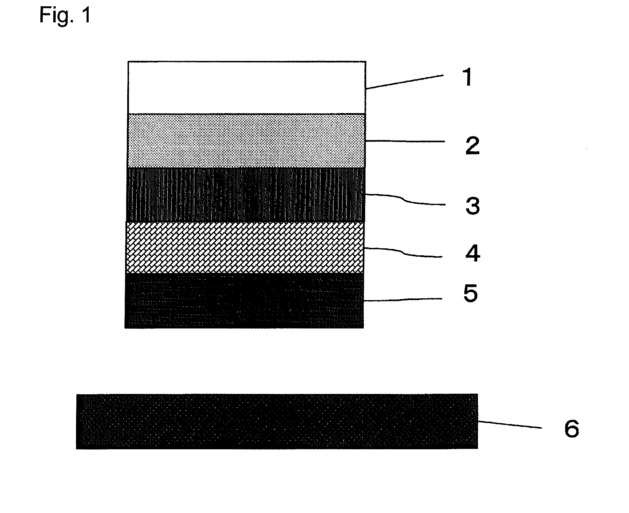

FIG. 1 is a sectional view showing a hot stamping foil conventionally used and a transfer method using said stamping foil. The hot stamping foil has a release layer 2, a protective layer 3, a deposited layer 4 and an adhesive layer 5 on a substrate film 1.
In order to perform the transfer on the surface of molded article by using this hot stamping foil, a transfer layer is transferred on a molded article surface 6, when the substrate film together with a release layer is peeled off after the stamping foil is attached by application of pressure while being heated on the substrate film with a heating die (thermal element), and the adhesive layer bonds to the molded article surface.

Above all, usually, a three-dimensional crosslink is caused by applying a heat or an active energy ray irradiation such as ultraviolet rays or electron beams to mixture liquids to cure the mixture liquids for the protective layer 3 containing various isocyanate curing agents together with various resins, and the protective layer 3 is formed as a cured layer exhibiting the heat resistance which can sufficiently endure the heating in the hot stamping.

However, in the case that various isocyanate curing agents are used for the protective layer mixture liquid, the storage stability is poor particularly under a high temperature and humidity in summer, a usual protective layer mixture liquid should be stored in the form of two separate components (two-component or two-liquid) consisting of a resin component and an isocyanate curing agent component, and both components should be mixed at the time of production of the hot stamping foil. Also, the composition liquid, which is once mixed, gels after a time of several hours to several days and cannot be used. Furthermore, there is the problem that, when the two-component type resin composition liquid is used as the protective layer mixture liquid, a post-processing step such as a heat-treatment step is necessary after the transfer film is formed.

### PRIOR ART DOCUMENTS

- Patent Document 1:: JP-B-60-40396
- Patent Document 2:: JP-A-62-282969
- Patent Document 3:: JP-A-9-207463

### SUMMARY OF THE INVENTION

### PROBLEM TO BE SOLVED BY THE INVENTION

An object of the present invention is to solve the problems described above, to provide a composition for transfer materials used as, for example, a protective layer mixture liquid which is one-component type, and to provide a transfer foil having a protective layer which is formed by using said composition for transfer materials.

### MEANS TO SOLVE THE PROBLEM

As results after the present inventors intensively studied in order to solve the above-mentioned problems, the present inventors discovered that the above-mentioned problems could be solved by using a blocked polyisocyanate wherein an isocyanate group of an isocyanate is blocked with an active hydrogen-containing compound (hereinafter referred to as "blocking agent") as a curing agent in the composition for transfer materials, and completed the present invention.

That is, the present invention resides in a composition for transfer materials comprising a resin and a blocked polyisocyanate. Preferably, the resin is at least one selected from a thermosetting resin, an ultraviolet-curable resin and an electron beam-curable resin. Particularly preferably, the resin is at least one selected from a polyester resin, an epoxy resin, a melamine resin and an acrylic resin. Preferably, the blocked polyisocyanate is a blocked diisocyanate.

### EFFECT OF THE INVENTION

The composition for transfer materials of the present invention is superior in storage stability while being one-component type. It is not necessary for the composition for transfer materials of the present invention to be stored separately so that both components are mixed at the time of production, unlike the conventional two-component type mixture liquids. Furthermore, preferably, a transfer foil having the protective layer formed from a composition for transfer materials of the present invention is excellent in printing property and stability, and a post-processing step such as a heat-treatment step is unnecessary unlike the case of use of two-component type resin composition liquid.

### BRIEF DESCRIPTION OF DRAWING

FIG. 1 shows a cross-sectional view for explaining a hot stamping foil and a transfer method using said hot stamping foil.

### MODES CARRYING OUT THE INVENTION

### Composition for transfer materials

The composition for transfer materials of the present invention is characterized by containing the resin and the blocked polyisocyanate. The composition for transfer materials of the present invention is mainly used to form the protective layer (referred to also as "colored layer") in the transfer foil such as the hot stamping foil.

The resin used in the composition for transfer materials of the present invention is not particularly limited, as far as the resin can be coated in the form of a liquid or solution state, and three-dimensional crosslink is caused to cure the composition by applying a heat or an active energy ray irradiation such as ultraviolet rays and electron beams. Preferably, the resin is a polyester resin, an epoxy resin, a melamine resin and/or an acrylic resin. Specific examples of the resin include resins such as a heat-curable polyester, a heat-curable polyurethane, an epoxy resin, a polyimide, a polyester-imide, a polyamide-imide, a melamine resin, a phenolic resin, a urea resin, a guanamine resin, a diallyl phthalate resin, an acrylate ester of polyhydric alcohol, an epoxy acrylate, a urethane acrylate, a polyester acrylate, a polyether acrylate, an alkyd acrylate, a melamine acrylate, a nitrocellulose resin, a cellulose nitrate resin and a cellulose acetate butyrate resin.
Preferably the resin contains a cellulose material (such as a nitrocellulose (resin), a cellulose nitrate (resin) and a cellulose acetate butyrate (resin)). In the resin, the amount of the cellulose material may be at least 5% by weight, e.g., at least 20% by weight, particularly 25 to 90% by weight, based on the resin.

The blocked polyisocyanate used in the composition for transfer materials of the present invention can be prepared by reacting the polyisocyanates with various blocking agents (by a well-known method). The blocking reaction may be performed in the absence of solvents, but the blocking reaction is preferably performed in the presence of suitable solvents such as esters, ethers, ketones and aromatics which do not have active hydrogen. Also, in the blocking reaction, organic metals containing, for example, tin, zinc and/or lead, and tertiary amines may be used as a catalyst.

Examples of the polyisocyanate include an aliphatic diisocyanate and a cycloaliphatic diisocyanate. Preferably the aliphatic diisocyanate is an aliphatic diisocyanate having 4 to 30 carbon atoms. Preferably the cycloaliphatic diisocyanate is a cycloaliphatic diisocyanate having 8 to 30 carbon atoms. Specifically, it is possible to use one or at least two selected from tolylene diisocyanate, 4,4'-diphenyl methane diisocyanate, xylylene diisocyanate, m-xylylene diisocyanate, hexamethylene diisocyanate, lysin diisocyanate, hydrogenated 4,4'-diphenyl methane diisocyanate, hydrogenated tolylene diisocyanate, isophorone diisocyanate, trimethyl hexamethylene diisocyanate, dimer acid diisocyanate and tolylene diisocyanate, and polymers of these compounds. The polyisocyanate may be an isocyanurate-modified polyisocyanate, a biuret-modified polyisocyanate and/or a urethane-modified polyisocyanate.

Examples of the blocking agent include blocking agents such as phenol, lactam, oxime, active methylene, alcohol, mercaptan, acid amide, imide, amine, imidazole and urea blocking agents. Preferable blocking agent is the alcohol blocking agent, the phenol blocking agent and the oxime blocking agent. The alcohol blocking agent is particularly preferable.

Examples of the alcohol blocking agent include monohydric to polyhydric alcohols, e.g., a monohydric, dihydric, trihydric or tetrahydric alcohol. Preferably the monohydric alcohol is a monohydric alcohol having 1 to 30, particularly 1 to 20 carbon atoms, which may have an ether group.
Preferably the phenol blocking agent is phenol which may have 1 to 3 alkyl groups having 1 to 8 carbon atoms.
Preferably the oxime blocking agent is a compound which has an oxime group (>C=N-OH) and further has one or zero hydrogen atoms and one or two hydrocarbon groups (particularly alkyl groups) having 1 to 10 carbon atoms.

Specific examples of the blocking agent are mentioned below. The phenol blocking agent includes phenol, cresol, xylenol and ethyl phenol. The lactam blocking agent includes ε-caprolactam, δ-valerolactam, β-butyrolactam and β-propiolactam. The oxime blocking agent includes formamide oxime, acetamide oxime, acetoxime, methyl ethyl ketoxime, diacetyl monoxime, benzophenone oxime and cyclohexanone oxime. The active methylene blocking agent includes diethyl malonate, dimethyl malonate, ethyl acetoacetate and acetyl acetone. The alcohol blocking agent includes methanol, ethanol, propanol, isopropanol, butanol, 2-ethylhexanol, ethylene glycol monomethyl ether, ethylene glycol monoethyl ether and ethylene glycol monobutyl ether.

The blending amount of the blocked polyisocyanate used for the composition for transfer materials of the present invention is preferably 10 to 150 parts by weight, particularly preferably 20 to 120 parts by weight, based on 100 parts by weight of the resin.

Various blending ingredients which are usually used in the art, e.g., a solvent and a coloring agent such as a dye can be arbitrarily used for the composition for transfer materials of the present invention.

Specific examples of the solvent used for the composition for transfer materials of the present invention include hydrocarbons such as benzene, toluene, xylene, cyclohexane, mineral spirits and naphtha; ketones such as acetone, methyl ethyl ketone (2-butanone) and methyl isobutyl ketone; and esters such as ethyl acetate, n-butyl acetate and cellosolve acetate. Xylene, n-butyl acetate and methyl ethyl ketone (2-butanone) are preferable. The blending amount of the solvent is not limited, and is preferably 50 to 2000 parts by weight, particularly preferably 100 to 1500 parts by weight, based on 100 parts by weight of the resin.

### Transfer foil

The transfer foil (such as the hot stamping foil) is explained below. The transfer foil of the present invention is characterized in that the protective layer (referred also as "colored layer") is formed from the composition for transfer materials of the present invention. Usually, the transfer foil (such as hot stamping foil) often consists of a release layer 2, a protective layer (a colored layer) 3, a deposited layer 4 and an adhesive layer 5 on one surface of a substrate 1. The substrate 1, the protective layer (colored layer) 3 and the adhesive layer 5 are essential, but the release layer 2 and/or the deposited layer 4 are optional. The transfer foil of the present invention is characterized in that the protective layer (the colored layer) 3 is formed by using the composition for transfer materials. The following explanations show only representative production method of the transfer foil. The production method is not particularly limited, as far as the advantageous effects of the invention are achieved.

The substrate used for the transfer foil of the present invention is not particularly limited. The substrate may be any one, as far as the substrate is used in a usual transfer foil having enough self-supportability. Examples of the substrate includes a resin-based film comprising a polyester resin, a polyamide resin, a polyamide-imide resin, a polyethylene resin, a polypropylene resin, a cellulose acetate resin, a polycarbonate resin and/or a polyvinyl chloride resin; and a film or a sheet including western-style paper and Japanese-style paper e.g., cellophane paper and glassine paper. The thickness of the substrate is 6 to 100 µm, preferably 12 to 25 µm.

The release layer used for the transfer foil of the present invention includes coating films mainly comprising one or at least two of a paraffin wax, a silicone, an acrylic resin, a urethane resin, a cellulose resin, a melamine resin, a urea resin, a urea-melamine resin and a benzoguanamine resin. The release layer can be formed by applying a coating on the substrate, and drying the coating after the application. The thickness of the release layer is about 0.1 to 2 µm.

The protective layer used for the transfer foil of the present invention can be formed by applying the above-described composition for transfer materials of present invention to a release layer surface, and drying the composition after the application. The thickness of the protective layer is about 0.3 to 5.0 µm.

For example, a metal-vapor deposition layer can be formed by, for example, vacuum-depositing a metal such as aluminum, tin, copper and chrome on the protective layer. The thickness of the metal-vapor deposition layer is 100 to 1000 angstrom. This decoration layer can be prepared in the form of one layer or at least two layers at the same time.

The adhesive used for the adhesive layer in the present invention is not particularly limited. Adhesives used in usual transfer foils can be used. The adhesive is selected from, for example, adhesives containing, as a main component, one or at least two selected from:
emulsion-type adhesives such as an acrylate-based adhesive, a vinyl acetate-based adhesive, a vinyl chloride-based adhesive, a polyethylene-based and a styrene/butadiene-based adhesive, and organic solvent-type adhesives such as an ethylene/vinyl acetate-based adhesive, a chlorinated polypropylene-based adhesive, a vinyl chloride/vinyl acetate-based adhesive, a phenol-based adhesive, a xylene-based adhesive, a urea-based adhesive, an alkyd-based adhesive, an epoxy-based adhesive, a urethane-based adhesive and a silicone-based adhesive. The adhesive layer can be formed by applying the adhesive to the metal-vapor deposition layer, and drying the adhesive after the application. The thickness of the adhesive layer is not particularly limited. The thickness of the adhesive layer is about 1 to 100µm depending on surface shapes and material types of an article to be impressed (article subjected to transfer).

The transfer foil can be impressed in various types of article to be impressed (surfaces of the article having a plane shape or a solid (three-dimensional) shape). The transfer can be conducted by a hot stamping or a cold stamping. The hot stamping is preferable.
In the hot stamping, a thermal attachment is performed by using a stamping die. In the hot stamping, a heat (e.g., a temperature of 80 to 200°C, particularly 100 to 150°C) and a pressure (e.g., 0.1 to 50 atm) are applied to the transfer foil for a time of from 0.1 seconds to three minutes.
In the cold stamping, the transfer foil stamping can be performed by pressure application with a printing die (plate) without applying a heat. The adhesive can be irradiated with the radiations such as ultraviolet rays, and a pressure (e.g., 0.1-50 atm) can be subjected to the transfer foil for a time of from 0.1 seconds to 3 minutes.
The surface of molded article having the transfer layer is prepared by the transfer.

The present invention is further specifically explained by describing the following Examples and Comparative Examples.
Each of the transfer foils in Examples and Comparative Examples has a structure comprising a release layer, a protective layer, a deposited layer and an adhesive layer on a substrate. The release layer, the protective layer and the adhesive layer are formed by coating and drying each of a coating liquid for release layer, a coating liquid for protective layer and a coating liquid for adhesive layer, except the substrate and the deposited layer prepared by evaporating a metal by a sputtering process. The composition for transfer materials of the present invention corresponds to the coating liquids for protective layer in Examples.

The blended ingredients used in Examples and Comparative examples are shown below. Unit of the blending amounts in Table 1 and Table 3 is part(s) by weight. In the followings, % and part are based on weight, unless otherwise specified.
#1 "DAISO DAP A" manufactured by DAISO Co., Ltd.
#2 "DURANATE TPA-100" manufactured by Asahi Kasei Chemicals Corporation
#3 "TAKENATE D-204" manufactured by Mitsui Chemicals, Inc.
#4 "nitrocellulose" manufactured by TAIHEI CHEMICALS LIMITED.
#5 "KAYANOL YELLOW" manufactured by Nippon Kayaku Co., Ltd.
#6 "WAX-115" manufactured by Nippon Seiro Co., Ltd.
#7 "SOLVENT NAPHTHA" manufactured by Wako Pure Chemical Industries, Ltd.
#8 "KANEVINYL M" manufactured by KANEKA CORPORATION

### Preparative Example 1

The content of a four-necked flask equipped with a stirrer, a thermometer, a reflux condenser, a nitrogen-introducing tube and a dripping funnel was made to have a nitrogen atmosphere. HMDI (hexamethylene diisocyanate)-based polyisocyanate "DURANATE TPA-100" manufactured by Asahi Kasei Chemicals Corporation (100 parts) and xylene (50 parts) were charged, and methyl ethyl ketoxime was dropwise added until characteristic absorptions of the isocyanate in an infrared spectrum disappeared, to give a reaction liquid containing a blocked polyisocyanate. The resultant reaction liquid was filtered to give a blocked polyisocyanate (solid) obtained by reacting hexamethylene diisocyanate with methyl ethyl ketoxime as the blocking agent. Hereinafter, this blocked isocyanate is referred to as "Blocked polyisocyanate prepared in Preparative Example 1".

### Preparative Example 2

The content of a four-necked flask equipped with a stirrer, a thermometer, a reflux condenser, a nitrogen-introducing tube and a dripping funnel was made to have a nitrogen atmosphere. TDI (tolylene diisocyanate)-based polyisocyanate "TAKENATE D-204" manufactured by Mitsui Chemicals, Inc. (100 parts) and xylene (50 parts) were charged, and ethyl alcohol was dropwise added until characteristic absorptions of the isocyanate in an infrared spectrum disappeared, to give a reaction liquid containing a blocked polyisocyanate. The resultant reaction liquid was filtered to give a blocked polyisocyanate (solid) obtained by reacting tolylene diisocyanate with ethyl alcohol as the blocking agent. Hereinafter, this blocked isocyanate is referred to as "Blocked polyisocyanate prepared in Preparative Example 2."

### Examples 1 and 2 and Comparative Examples 1 and 2

### Stability of coating liquid for protective layer

The resultant coating liquid for protective layer having ingredients shown in Table 1 was stored at 40°C for one week. When a viscosity increase of the coating liquid after one week was not observed, the coating liquid was evaluated as "Good", and when the viscosity increase was observed, the coating liquid was evaluated as "Poor." The results are shown in Table 2.

**Table 1**

| Unit : Parts by weight | | | | |
|---|---|---|---|---|
| | Ex. 1 | Ex. | Com. Ex. 1 | Com. Ex. 2 |
| Diallyl phthalate resin #1 | 10 | 10 | 10 | 10 |
| Blocked polyisocyanate prepared in Preparative Example 1 | 10 | | | |
| Blocked polyisocyanate prepared in Preparative Example 2 | | 10 | | |
| HMDI-based polyisocyanate #2 | | | 10 | |
| TDI-based polyisocyanate #3 | | | | 10 |
| Butyl acetate | 70 | 70 | 70 | 70 |
| 2-Butanone | 70 | 70 | 70 | 70 |
| Nitrocellulose #4 | 5 | 5 | 5 | 5 |
| Dye yellow #5 | 2 | 2 | 2 | 2 |

**Table 2**

| Ex. 1 | Ex. 2 | Com. Ex. 1 | Com. Ex. 2 |
|---|---|---|---|
| Good | Good | Poor | Poor |

### Examples 3 and 4 and Comparative Examples 3 and 4

A coating liquid for release layer having the ingredients shown in the following Table 3 was gravure coated on one surface of a polyethylene terephthalate film ("LUMIRROR" manufactured by Toray Industries, Inc.) having a thickness of 12 µm as a substrate film in a dry state application amount of 0.5 g/m² and dried to form a release layer. On this release layer, a coating liquid for protective layer having ingredients shown in the following Table 3 was applied in a dry state application amount of 1.0 g/m² with a gravure coater and dried to form a protective layer. Next, aluminum as a metal-vapor deposition layer was formed by a sputtering process in a thickness of 300 angstrom on a surface of this protective layer. Furthermore, on this metal-vapor deposition layer, a coating liquid for adhesive layer having ingredients shown in the following Table 3 was applied in a dry state application amount of 0.7 g/m² with a roll coater and dried to form an adhesive layer, whereby obtained transfer foils of Examples 3 and 4 and Comparative Examples 3 and 4.

**Table 3**

| | Ex. 3 | Ex. 4 | Com. Ex. 3 | Com. Ex. 4 |
|---|---|---|---|---|
| Coating liquid for release laver | | | | |
| Paraffin wax # 6 | 5 | 5 | 5 | 5 |
| Petroleum naphtha # 7 | 100 | 100 | 100 | 100 |

| Coating liquid for protective layer | | | | |
|---|---|---|---|---|
| Diallyl phthalate resin #1 | 10 | 10 | 10 | 10 |
| Blocked polyisocyanate prepared in Preparative Example 1 | 10 | | | |
| Blocked polyisocyanate prepared in Preparative Example 2 | | 10 | | |
| HMDI-based polyisocyanate #2 | | | 10 | |
| TDI-based polyisocyanate #3 | | | | 10 |
| Butyl acetate | 70 | 70 | 70 | 70 |
| 2-Butanone | 70 | 70 | 70 | 70 |
| Nitrocellulose #4 | 5 | 5 | 5 | 5 |
| Complex salt Dye yellow #5 | 2 | 2 | 2 | 2 |

| Coating liquid for adhesive layer | | | | |
|---|---|---|---|---|
| Vinyl chloride/vinyl acetate copolymer resin #8 | 30 | 30 | 30 | 30 |
| Toluene | 70 | 70 | 70 | 70 |

Foil stamping was performed by using each of the transfer foils of Examples 3 and 4 and Comparative Examples 3 and 4 and transfer properties of the printing (imprint) was visually observed and evaluated. The evaluation was performed in the following standards whether redundant "foil burr" stuck around the foil stamped on substrate. The results are shown in Table 4.
1: Foil burr of at least 1 mm is observed on entire surface.
2: Foil burr is partially observed.
3: No foil burr is observed.

### Printing property of transfer foil

Each of the transfer foils of Examples 3 and 4 and Comparative Examples 3 and 4 was stamped at a heat die (thermal element) temperature of 120°C on a substrate with by using a hot stamping machine H-50 manufactured by AMAGASAKI MACHINERY Co., Ltd. Redundant "foil burr" around the foil stamped on the substrate was evaluated according to the above-mentioned standards.

### Stability of transfer foil

Each of the transfer foils of Examples 3 and 4 and Comparative Examples 3 and 4 was kept at 40°C for three months. After three months, each of the transfer foils of Examples 3 and 4 and Comparative Examples 3 and 4 was stamped at a heat die temperature of 120°C by using a hot stamping machine H-50 manufactured by AMAGASAKI MACHINERY Co., Ltd. Redundant "foil burr" around the foil stamped on the substrate was evaluated according to the above-mentioned standards.

**Table 4**

| | Printing property of transfer foil | Stability of transfer foil |
|---|---|---|
| Ex. 3 | 3 | 3 |
| Ex. 4 | 3 | 3 |
| Com. Ex. 3 | 3 | 1 |
| Com. Ex. 4 | 3 | 2 |

In comparison between Examples 1 and 2 and Comparative Examples 1 and 2, it is understood that storage stability of Examples 1 and 2 is superior to Comparative Examples 1 and 2, because a viscosity increase was not observed after one week in Examples 1 and 2 using a coating liquid for protective layer comprising a composition containing blocked polyisocyanate which is a composition for transfer materials of the present invention, while the viscosity increase was observed after one week in Comparative Examples 1 and 2 using a coating liquid for protective layer comprising a composition for transfer materials containing a usual polyisocyanate.
In comparison between Examples 3 and 4 and Comparative Examples 3 and 4, it is understood that the foils of Examples 3 and 4 formed by using a coating liquid for protective layer comprising a composition containing blocked polyisocyanate which is a composition for transfer materials of the present invention has excellent printing property of transfer foil as well as excellent stability of transfer foil, compared with Comparative Examples 3 and 4.

### INDUSTRIAL APPLICABILITY

The transfer foil of the present invention can be used for decoration of article to be impressed, having a plane shape or solid shape including various articles to be impressed, e.g., an interior material and exterior material in an automobile, a ship and an air plane; and a cosmetics container, a cap, a general-purpose package, an in-mold molded article, a light-power product, an interior and exterior building article, a sliding paper-door, a kimono, clothes, furniture, a plastic work piece, an industrial artificial products, a folk craft product, a book and card.

### EXPLANATION OF REFERENCE NUMERALS

- 1:: Substrate film
- 2:: Release layer
- 3:: Protective layer
- 4:: Deposited layer
- 5:: Adhesive layer
- 6:: Molded article surface

## Claims

1. A composition for transfer materials comprising a resin and a blocked polyisocyanate.

2. The composition for transfer materials according to claim 1, wherein the resin is at least one selected from a thermosetting resin, an ultraviolet-curable resin and an electron beam-curable resin.

3. The composition for transfer materials according to claim 2, wherein each of the thermosetting resin, the ultraviolet-curable resin and the electron beam-curable resin is at least one selected from a polyester resin, an epoxy resin, a melamine resin and an acrylic resin.

4. The composition for transfer materials according to any one of claims 1 to 3, wherein the blocked polyisocyanate is a blocked diisocyanate.

5. A transfer foil comprising a protective layer which is formed by using the composition for transfer materials according to any one of claims 1 to 4.

6. The transfer foil according to claim 5, which has the protective layer and an adhesive at one side of a substrate.

7. The transfer foil according to claim 6, further comprising a release layer.

8. The transfer foil according to claim 6 or 7, further comprising a metal vapor-deposition layer.
